# EUROPEAN PATENT SPECIFICATION

(11) **EP 2 536 552 B1**
(45) Date of publication and mention of the grant of the patent: **21.05.2014**
(21) Application number: 11707995.4
(22) Date of filing: 18.02.2011
(51) Int. Cl.: B29C 70/38

(54) **MULTI-HEAD FIBER PLACEMENT APPARATUS**
MEHRKOPF-FASERBESTÜCKUNGSVORRICHTUNG
APPAREIL DE POSITIONNEMENT DE FIBRE À TÊTES MULTIPLES

(30) Priority: 19.02.2010 US 306082 P
(43) Date of publication of application: 26.12.2012
(73) Proprietor: Vestas Wind Systems A/S, 8200 Aarhus N (DK)
(72) Inventor: HOLLOWAY, Gary, Cowes PO31 7EG (GB)
(74) Representative: Kent, Peter Joseph
(86) International application number: PCT/DK2011/050049
(87) International publication number: WO 2011/100977

(56) References cited:
- EP-A2- 2 130 666
- FR-A- 1 360 107
- US-A1- 2007 187 024
- US-A1- 2010 006 205

## Description

Automatic fiber placement machines are known in the field of composite materials as making the manufacturing more efficient. They involve moving a fiber placement head past a tool, such as a mould, and depositing fiber tows on the tool, see e.g. US6692681B1, US2007044896A1, WO2005105641A2, US7376480, EP 1804146, EP1292522B1 or US20080156436A1. Automatic fiber placement machines are traditionally used for manufacturing relatively small parts. For making larger composite bodies, such as shells for wind turbine blades, special challenges occur from the large size of the tools used, the large amount of material that has to be fed, and the time that is needed for completion of the placement process.

US2007/0187024A1 describes a multi-head tape lamination machine in which the multiple heads are arranged to place respective strips of tape side-by-side upon a substrate.

The object of the invention is to make automatic manufacturing of composite parts better adapted to manufacturing of large composite parts. This object is reached with a composite body manufacturing apparatus comprising a mould and a fiber placement machine comprising at least two fiber placement heads, the fiber placement machine being adapted to move the fiber placement heads past the mould and to deposit with the heads on the mould respective plies, wherein the fiber placement heads are arranged so that they simultaneously and sequentially follow the same path of movement, so that a multilayered stack of plies can be provided by the simultaneous movement of the heads.

This means that a relatively thick layer of material can be provided by each movement of the machine. At the same time, the material for the plies can be kept relatively thin so that material handling before deposition in the mould is not complicated by thick materials.

Here a composite body means an item comprising a fiber reinforced plastic material, such as epoxy, polyester, vinylester or similar, reinforced with a fiber material, such as glass fiber, carbon fiber, aramid fiber or similar.

The object is also reached with a method according to claim 2.

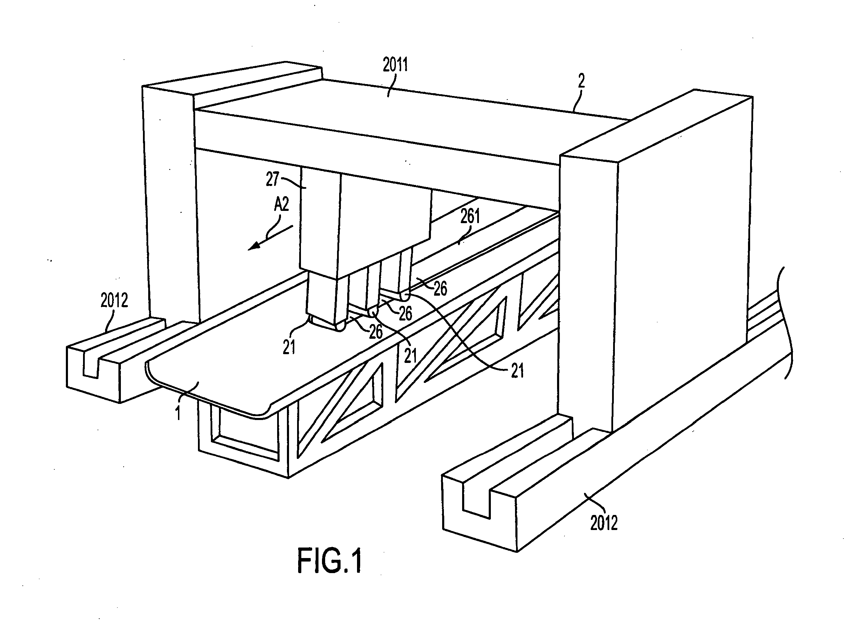

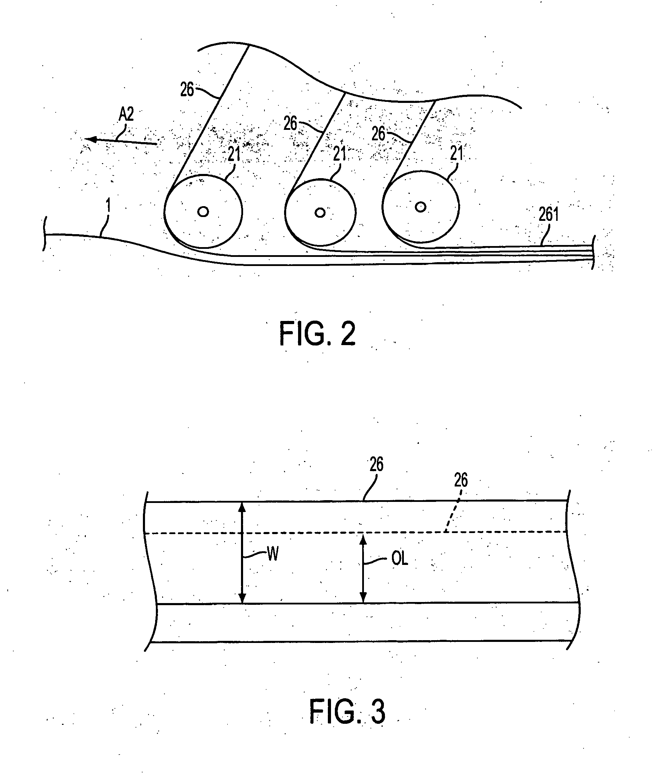

Below an embodiment of the invention will be described with reference to the drawings, in which fig. 1 shows a perspective view of a composite body manufacturing apparatus according to one embodiment of the invention, fig. 2 shows a side view of a detail of the apparatus in fig. 1, and fig. 3 shows a top view of plies provided in a mould.

Fig. 1 shows schematically a composite body manufacturing apparatus according to one embodiment of the present invention. The apparatus comprises a wind turbine blade spar cap mould 1 and an automated fiber placement machine 2. The machine 2 comprises three fiber placement heads 21, which, by means of a guide arrangement, can be moved in any direction along the surface of the mould 1. The guide arrangement comprises a gantry 2011 which bridges the mould 1, and is movable in a longitudinal direction along the mould 1 by means of rails 2012. The fiber placement heads 21 are arranged on the gantry so as to allow movements in other directions, e.g. transversely to the mould, vertically and rotationally.

In this embodiment the fiber placement heads 21 are all arranged on the same holder 27 of the machine 2, and each head 21 comprises a roller 21. A plurality of reels (not shown) is provided in the holder 27 of the machine 2, each with a respective fiber tow of pre-impregnated fibers. (Alternatively, dry fiber tows could be provided.) As can also be seen in fig. 2, the machine 2 is arranged so that while being moved, each fiber placement head 21 is fed a plurality of tows from respective reels, and it places the tows side by side so as to form a ply 26, on the mould. Each fiber placement head 21 is adapted to be forced, while moving, to the mould 1, whereby the ply 26 is formed by each head 21. In the example shown in fig. 1 and fig. 2, the heads 21 are moved in a direction indicated by the arrow A2. The fiber placement heads 21 are arranged so that they follow, simultaneously and sequentially (one after the other), the same path of movement. Thereby, a multilayered stack 261 of plies 26 is provided by the simultaneous movement of the heads 21.

Referring to fig. 3, preferably simultaneously and sequentially deposited plies 26 overlap fully. In any case, simultaneously and sequentially deposited plies 26 overlap with an overlap width OL which is at least 50%, preferably at least 70%, more preferably at least 90%, of the width W of one of the plies. Fig. 3 shows only 2 plies, while fig. 1 and fig. 2 show simultaneous deposition of three plies. It should be noted that in other embodiments more than three piles can be deposited simultaneously.

As is known in the art, a heater (not shown) can be provided at the fiber placement heads 21 to heat the matrix of the fiber tows 24, 25 so as to make the fiber tows stick when deposited.

## Claims

1. A composite body manufacturing apparatus comprising a mould (1) and a fiber placement machine (2) comprising at least two fiber placement heads (21), the fiber placement machine (2) being adapted to move the fiber placement heads (21) past the mould (1) and to deposit with the heads (21) on the mould (1) respective plies (26), **characterised in that** the fiber placement heads (21) are arranged so that they simultaneously and sequentially follow the same path of movement, so that a multilayered stack (261) of plies can be provided by the simultaneous movement of the heads (21).

2. A method for forming a composite body, comprising moving at least two fiber placement heads (21) past a mould (1), simultaneously depositing with the heads (21) on the mould (1) respective plies (26), **characterised in that** the fiber placement heads (21) simultaneously and sequentially follow the same path of movement, so that a multilayered stack (261) of plies is provided by the simultaneous movement of the heads (21).

3. A method according to claim 2, wherein the simultaneously and sequentially deposited plies (26) overlap with an overlap width (OL) which is at least 50%, preferably at least 70%, more preferably at least 90%, of the width (W) of one of the plies (26).

4. A method according to any one of claims 2 or 3, wherein each ply (26) comprises a plurality of fiber tows placed side by side on the mould (1).

## Patentansprüche

1. Verbundkörperherstellungsvorrichtung, umfassend eine Form (1) und eine Faserbestückungsmaschine (2), die mindestens zwei Faserbestückungsköpfe (21) umfasst, wobei die Faserbestückungsmaschine (2) dafür eingerichtet ist, die Faserbestückungsköpfe (21) an der Form (1) vorüberzubewegen und mit den Köpfen (21) auf der Form (1) jeweilige Lagen (26) abzulagern, **dadurch gekennzeichnet, dass** die Faserbestückungsköpfe (21) derart angeordnet sind, dass sie gleichzeitig und sequentiell demselben Bewegungspfad folgen, so dass ein mehrlagiger Stapel (261) von Lagen durch die gleichzeitige Bewegung der Köpfe (21) bereitgestellt werden kann.

2. Verfahren zum Bilden eines Verbundkörpers, umfassend das an einer Form (1) Vorüberbewegen von mindestens zwei Faserbestückungsköpfen (21) bei gleichzeitigem Ablagern von jeweiligen Lagen (26) auf der Form (1) mittels der Köpfe (21), **dadurch gekennzeichnet, dass** die Faserbestückungsköpfe (21) gleichzeitig und sequentiell demselben Bewegungspfad folgen, so dass ein mehrlagiger Stapel (261) von Lagen durch die gleichzeitige Bewegung der Köpfe (21) bereitgestellt wird.

3. Verfahren gemäß Anspruch 2, wobei die gleichzeitig und sequentiell abgelagerten Lagen (26) sich mit einer Überlappbreite (OL) überlappen, die mindestens 50%, vorzugsweise mindestens 70%, besonders vorzugsweise mindestens 90% der Breite (W) einer der Lagen (26) entspricht.

4. Verfahren gemäß einem der Ansprüche 2 oder 3, wobei jede Lage (26) eine Vielzahl von Fasergarnen, die Seite an Seite auf die Form (1) bestückt sind, umfasst.

## Revendications

1. Appareil de fabrication d'un corps composite comprenant un moule (1) et une machine de mise en place de fibres (2) comprenant au moins deux têtes de mise en place de fibres (21), la machine de mise en place de fibres (2) étant à même de déplacer les têtes de mise en place de fibres (21) à travers le moule (1) et de déposer avec les têtes (21) sur le moule (1) des plis respectifs (26), **caractérisé en ce que** les têtes de mise en place de fibres (21) sont aménagées de sorte qu'elles suivent simultanément et en séquence le même trajet de déplacement de sorte qu'une pile multicouche (261) de plis puisse être formée par le mouvement simultané des têtes (21).

2. Procédé de formation d'un corps composite, comprenant le déplacement d'au moins deux têtes de mise en place de fibres (21) à travers un moule (1) en déposant simultanément avec les têtes (21) sur le moule (1) des plis respectifs (26), **caractérisé en ce que** les têtes de mise en place de fibres (21) suivent simultanément et en séquence le même trajet de déplacement de sorte qu'une pile multicouche (261) de plis soit formée par le mouvement simultané des têtes (21).

3. Procédé selon la revendication 2, dans lequel les plis (26) déposés simultanément et en séquence se chevauchent avec une largeur de chevauchement (OL) qui est au moins de 50 %, de préférence au moins de 70 %, mieux encore au moins de 90 %, de la largeur (W) de l'un des plis (26).

4. Procédé selon l'une quelconque des revendications 2 ou 3, dans lequel chaque pli (26) comprend une pluralité de filasses de fibres placées côte à côte sur le moule (1).
